# EUROPÄISCHE PATENTSCHRIFT

(11) **EP 3 611 036 B1**
(45) Veröffentlichungstag und Bekanntmachung des Hinweises auf die Patenterteilung: **20.01.2021**
(21) Anmeldenummer: 19184842.3
(22) Anmeldetag: 08.07.2019
(51) Int. Cl.: B60C 9/14, B60C 1/00, C08K 3/04, C08K 3/36

(54) **NUTZFAHRZEUGREIFEN**
COMMERCIAL VEHICLE TYRES
PNEU DE VÉHICULE UTILITAIRE

(30) Priorität: 15.08.2018 DE 102018213704
(43) Veröffentlichungstag der Anmeldung: 19.02.2020
(73) Patentinhaber: Continental Reifen Deutschland GmbH, 30165 Hannover (DE)
(72) Erfinder: Kleffmann, Jens, 30165 Hannover (DE); Hey, Jakob, 30165 Hannover (DE)
(74) Vertreter: Finger, Karsten

(56) Entgegenhaltungen:
- EP-A1- 0 536 615
- EP-A1- 1 632 335
- EP-A1- 2 425 991
- DE-A1-102009 003 517
- DE-A1-102014 207 771
- JP-A- 2017 165 135

## Beschreibung

Die Erfindung betrifft einen Nutzfahrzeugreifen in radialer Bauart mit einem Laufstreifen, einem mehrere Gürtellagen aufweisenden Gürtelverband, einer der Reifeninnenseite zugewandten, luftdichten Innenschicht, einer Karkasseinlage mit in radialer Richtung oder im Wesentlichen in radialer Richtung verlaufenden Karkasskorden und einer zwischen der Karkasseinlage und der Innenschicht befindlichen Squeegee-Lage, welche auf einer Kautschukmischung basiert, die als Füllstoff Ruß und/oder Kieselsäure enthält.

Bei Nutzfahrzeugreifen ist es üblich, eine zusätzliche Gummilage, eine sogenannte Squeegee-Lage, zwischen der luftdichten Innenschicht und der Gummierung der Karkasseinlage vorzusehen. Häufig wird die Squeegee-Lage aus einer Kautschukmischung hergestellt, die der Gummierungsmischung der Karkasseinlage ähnlich ist, insbesondere erfüllen beide Mischungen für gewöhnlich die Anforderungen bezüglich Stahlkordhaftung und Haltbarkeit. Es ist daher auch üblich, in der Gummimischung für die Squeegee-Lage Naturkautschuk bzw. einen hohen Anteil an Naturkautschuk zu verwenden sowie ein entsprechendes Haftvermittlersystem einzubringen. Die bekannten Squeegee-Mischung weisen ferner einen hohen Anteil an verstärkenden Füllstoffen auf, meistens Ruß, in einer Menge von über 50 phr. Durch ihre Mischungszusammensetzung weisen bekannte Squeegee-Lagen eine gute mechanische Reißfestigkeit und eine geringe Fließ- bzw. Kriechneigung auf. Während des Reifenaufbauprozesses und der Reifenvulkanisation treten im Reifenunterbau starke Fließprozesse, insbesondere im Bereich der Innenschicht, der Squeegee-Mischung und der Gummierung der Karkasseinlage auf. Diese Fließprozesse führen oft zu merklichen Materialdickenveränderungen dieser Reifenbauteile. Die Squeegee-Lage stellt im Reifen nun eine Schutzschicht dar, die verhindern soll, dass die Innenschichtmischung durch Fließ- oder Kriechvorgänge während der Reifenherstellung und der Vulkanisation des Reifens sowie im bereits ausgeheizten Reifen während des Reifeneinsatzes in die Zwischenräume zwischen den Karkasskorden der Karkasseinlage eindringt oder in Kontakt mit den Karkasskorden kommt. Die Innenschicht stellt nämlich aufgrund ihrer Mischungszusammensetzung kaum eine Haftung zu den Karkasskorden der Karkasseinlage her und hat zudem unvorteilhafte mechanische Eigenschaften, insbesondere eine mangelnde Reißfestigkeit und kann so zu einer Rissinitiierung und zu einem Risswachstum führen, wodurch die Dauerhaltbarkeit und/oder die Runderneuerungsfähigkeit von Nutzfahrzeugreifen beeinträchtigt werden.

Ein Nutzfahrzeugreifen der eingangs genannten Art ist beispielsweise aus der EP 2 425 991 B1 bekannt. Die Squeegee-Lage dieses Nutzfahrzeugreifens ist zweischichtig ausgeführt, wobei die der Karkasslage zugewandte äußere Schicht auf einer Haftmischung basiert und hinsichtlich guter Stahlkordhaftung und langer Haltbarkeit ausgelegt bzw. optimiert ist, und wobei die innere Schicht auf einer Kautschukmischung basiert, die keine Haftmischung ist. Die Squeegee-Lage soll dadurch eine gute Stahlkordhaftung und eine gute Haltbarkeit aufweisen und kostengünstiger als die üblichen Squeegee-Lagen hergestellt werden können.

Ein weiterer Nutzfahrzeugreifen der eingangs genannten Art ist beispielsweise aus der DE 10 2009 003 517 A1 bekannt. Der Nutzfahrzeugreifen weist eine Innenschicht, eine Karkasseinlage mit Karkasskorden und eine zwischen der Innenschicht und der Karkasseinlage angeordnete Squeegee-Lage auf. Die Squeegee-Lage basiert auf einer Kautschukmischung mit einer oder mehreren Polymerphase(n), wobei die Glasübergangstemperatur der oder zumindest einer der Polymerphase(n) um mindestens 5°C höher ist als jene der Kautschukmischung der Karkassgummierung und nicht höher als -20°C ist. Die Kautschukmischung der Squeegee-Lage enthält als Füllstoff insbesondere Ruß in einem Anteil von 40 phr bis 70 phr. Ein solcher Reifen ist im Hinblick auf seine Gasdichtheit verbessert, wobei insbesondere die Gefahr einer oxidativen Beanspruchung der vorhandenen Stahlkorde, beispielsweise in jenen der Karkasseinlage, vermieden wird.

Aus der EP 0 536 615 A1 ist ein Fahrzeugluftreifen mit einer Squeegee-Lage bekannt, welche im Bereich der radial äußeren Endabschnitte der Seitenwände dicker als in ihren sonstigen Bereichen ausgeführt ist. Dadurch soll die Gefahr, dass die Karkasseinlage in diesem Bereich beim Fahren mit zu geringem Luftdruck bzw. bei defektem Reifen (einem "Platten") beschädigt wird, verringert sein. Diese Gefahr besteht insbesondere bei Fahrzeugen mit Doppelbereifung, bei welchen unter Umständen der Reifenschaden nicht gleich erkannt wird.

Es ist bekannt, dass die Squeegee-Lagen in Nutzfahrzeugreifen einen gewissen Beitrag zum Rollwiderstand der Nutzfahrzeugreifen leisten. Sie können jedoch nicht weggelassen werden ohne die Dauerhaltbarkeit und die Runderneuerungsfähigkeit der Reifen negativ zu beeinflussen.

Der Erfindung liegt die Aufgabe zugrunde, bei Nutzfahrzeugreifen der eingangs genannten Art mit Squeegee-Lagen, den Rollwiderstand zu senken ohne die Dauerhaltbarkeit oder die Runderneuerungsfähigkeit der Reifen zu beeinträchtigen.

Gelöst wird die gestellte Aufgabe erfindungsgemäß dadurch, dass die Squeegee-Lage auf einer Kautschukmischung basiert, deren Füllstoffanteil an Ruß und/oder Kieselsäure 20 phr bis kleiner 35 phr beträgt.

Untersuchungen an Nutzfahrzeugreifen, insbesondere Reifen für Lastkraftwagen oder Busse haben gezeigt, dass Reifen, deren Squeegee- Lage auf einer Kautschukmischung basiert, deren Füllstoffanteil geringer als 35 phr ist, einen um 1,5 % bis 2 % geringeren Rollwiderstand aufweisen als Nutzfahrzeugreifen, deren Squeegee-Lage auf einer Kautschukmischung mit einem Füllstoffanteil von etwa 50 phr bis 55 phr basiert.

Um Kriech- und Fließvorgänge der Squeegee-Mischung bzw. Squeegee-Lage vor allem in den diesbezüglich heiklen Bereichen der Reifenschultern auf jeden Fall zu verhindern, ist es von Vorteil, in den Schulterbereichen eine höhere Schichtdicke der Squeegee-Lage vorzusehen. Die Squeegee-Lage ist daher in ihrem Verlauf über die Reifenschulterbereiche dicker als in ihrem Verlauf außerhalb der Reifenschulterbereiche. Dabei weist die Squeegee-Lage im Bereich der Randkanten der breitesten Gürtellage eine Schichtdicke auf, welche um mindestens 25 %, insbesondere um mindestens 50 %, bevorzugt um mindestens 100 % und besonders bevorzugt um mindestens 300 %, größer ist als der arithmetische Mittelwert der Schichtdicken im Reifenzenit und an den Stellen des Reifens mit der größten Querschnittsbreite.

Bei einer bevorzugten Ausführung weist die Squeegee-Lage im Bereich der Randkanten der breitesten Gürtellage eine Schichtdicke von 1,0 mm bis 3,5 mm, insbesondere von mindestens 2,0 mm, auf.

Es war zu erwarten, dass eine höhere Schichtdicke der Squeegee-Lage in den Reifenschulterbereichen den Rollwiderstand der Reifen wieder erhöhen würde. Überraschenderweise ist dieser Effekt jedoch nicht eingetreten, trotz höherer Schichtdicke in den Reifenschulterbereichen bleibt der Rollwiderstand der Reifen auf jenem Niveau, welches allein durch den geringen Füllstoffanteil in der Gummimischung für die Squeegee-Lage erzielt wird. Außerhalb der Reifenschulterbereiche, also außerhalb des Abschnittes mit einer größeren Dicke, verringert sich die Dicke der Squeegee-Lage in Richtung zum Reifenzenit und/oder in Richtung zu den Stellen des Reifens mit der größten Querschnittsbreite, insbesondere kontinuierlich.

Bevorzugt ist ferner eine Ausführung, bei der die Schichtdicke der Squeegee-Lage im Bereich der Randkanten der breitesten Gürtellage höchstens dem Fünffachen des arithmetischen Mittelwertes der Schichtdicken am Reifenzenit und an jenen Stellen, wo der Reifen seine größte Querschnittsbreite aufweist, beträgt.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigt die einzige Figur,

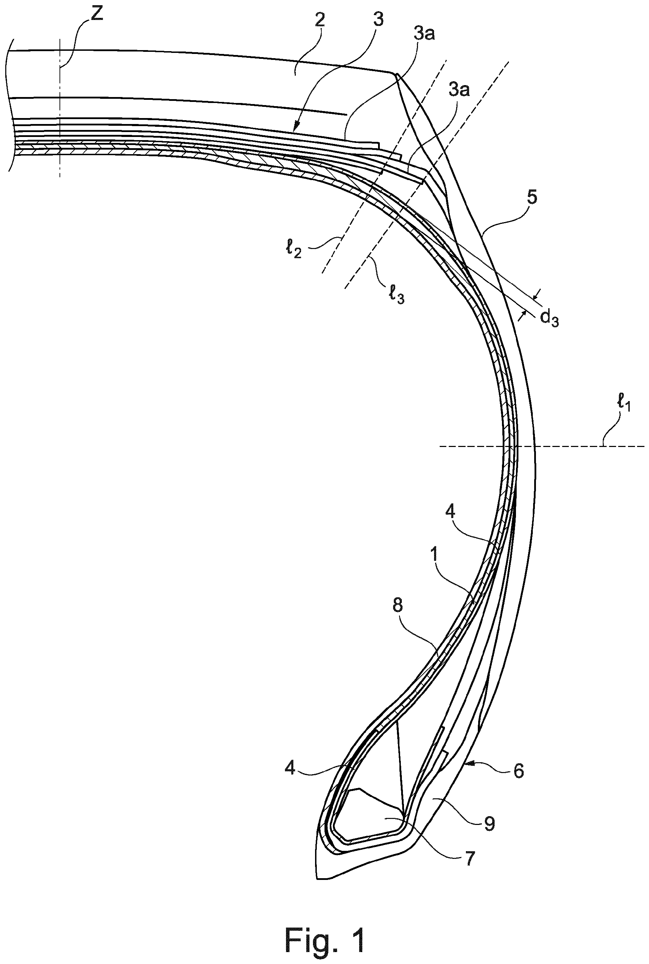

Fig. 1, einen Teilquerschnitt eines Fahrzeugluftreifens.

Gemäß der Erfindung ausgeführte Fahrzeugluftreifen sind Fahrzeugluftreifen in Radialbauart für Nutzfahrzeuge, wie Lastkraftwagen oder Busse, die eine Squeegee-Lage 1 enthalten. Die Bezeichnung "Squeegee" ist die übliche und dem Reifenfachmann bekannte Bezeichnung für eine Gummilage zwischen der Innenschicht und der Karkasseinlage.

Fig. 1 zeigt schematisch einen Querschnitt durch einen Nutzfahrzeugreifen mit einem Laufstreifen 2, der mit einer nicht dargestellten Profilierung versehen ist, einem Gürtelverband 3, einer ein- oder mehrlagigen Karkasseinlage 4, Seitenwänden 5, Wulstbereichen 6, welche in bekannter Weise mit einem Wulstkern 7, einem Hornprofil 9 und weiteren, nicht bezeichneten Wulstverstärkungslagen versehen ist, sowie mit einer Innenschicht 8. Der dargestellte Gürtelverband 3 ist ein für Nutzfahrzeugreifen typischer Gürtelverband mit vier Gürtellagen 3a, wobei die zweite Gürtellage 3a die breiteste Gürtellage ist. Die Innenschicht 8 bedeckt die Innenseite des Nutzfahrzeugreifens und besteht aus einer luftdichten Gummimischung, welche üblicherweise im Kautschuk- bzw. Polymer-Anteil ausschließlich oder zu einem wesentlichen Anteil Butylkautschuk enthält. Die Innenschicht 8 erstreckt sich, wie es auch Fig. 1 zeigt, bis in den Bereich der Wulstzehen der Wulstbereiche 6. Die Dicke der Innenschicht kann dabei über den Reifenquerschnitt variieren oder, wie in Fig. 1 gezeigt, über den Reifenquerschnitt im Wesentlichen einheitlich sein. Die Karkasseinlage 4 besteht aus in eine Karkassgummierung eingebetteten Karkasskorden, beispielsweise Stahlkorden oder Aramidkorden, die im Wesentlichen parallel zueinander verlaufen und einander daher nicht berühren. Die Karkasskorde verlaufen in den Seitenwänden 5 in radialer Richtung bzw. im Wesentlichen in radialer Richtung. Zwischen der Innenschicht 8 und der Innenseite der Karkassgummierung der Karkasseinlage 4 befindet sich die Squeegee-Lage 1, die von Wulstbereich zu Wulstbereich, ebenso wie die Innenschicht 8 und die Karkasseinlage 4, verläuft und in den Wulstbereichen 6 endet, beispielsweise einige Millimeter bis wenige Zentimeter radial außerhalb des Endes der Innenschicht 8.

Die Squeegee-Lage 1 besteht aus einem Gummimaterial, enthält üblicherweise keine Festigkeitsträger, weist jedoch üblicherweise ein Haftsystem zur Verbesserung ihrer Haftung an Festigkeitsträgern, wie z.B. an Stahlkord, auf. Die Squeegee-Lage 1 bildet im Reifen eine Schutzschicht, die verhindern soll, dass die Innenschicht 8 durch Kriechvorgänge in direkten Kontakt mit den Karkasskorden der Karkasseinlage 4 kommt oder dass die Innenschichtmischung während der Reifenherstellung, etwa während des Reifenaufbaus an Reifenaufbaumaschinen oder während der Vulkanisation des Rohreifens in einer Vulkanisationsform, durch Fließ- oder Kriechvorgänge in die Zwischenräume zwischen den Karkasskorden der Karkasseinlage 4 eindringt.

Die Squeegee-Lage 1 gemäß der Erfindung basiert auf einer Squeegee-Mischung, die einen deutlich geringeren Füllstoffanteil als die aus dem Stand der Technik bekannten Squeegee-Mischungen aufweist. Der Füllstoffanteil beträgt mindestens 20 phr und ist < 35 phr (parts per hundred rubber). Der Füllstoffanteil bezieht sich ausschließlich auf Ruß oder Kieselsäure oder auch auf eine Kombination von Ruß mit Kieselsäure.

Tabelle 1 enthält ein Mischungsbeispiel M_{Ref} einer Referenz-Squeegee-Mischung aus dem Stand der Technik sowie vier Mischungsbeispiele M_{E1}, M_{E2}, M_{E3} und M_{E4} von Squeegee-Mischungen, wobei wesentliche Mischungsbestandteile sowie deren Anteile in phr (parts per hundred rubber) angegebenen sind.

**Tabelle 1**

| | M_{Ref} | M_{E1} | M_{E2} | M_{E3} | M_{E4} |
|---|---|---|---|---|---|
| Naturkautschuk | 100 | 100 | 100 | 100 | 100 |
| Ruß N339 | 55 | 33 | - | 15 | 25 |
| Kieselsäure Ultrasil VN 3 | - | - | 35 | 22 | 9 |
| Alterungsschutzmittel Vulkanox HS (TMQ) | 2 | 2 | 2 | 2 | 2 |
| Haftvermittler Cobaltstearat | 1,7 | 1,7 | 1,7 | 1,7 | 1,7 |
| Haftvermittler Hexa(methoxymethyl)melamine | 1,6 | 1,6 | 1,6 | 1,6 | 1,6 |
| Beschleuniger DCBS (N-Dicyclohexyl-2-Benzthiiazylsulfenamid) | 2 | 2 | 2 | 2 | 2 |
| Schwefel | 2,5 | 2,5 | 2,5 | 2,5 | 2,5 |

Sämtliche Mischungen enthalten ausschließlich Naturkautschuk als Polymer, die Referenzmischung M_{Ref} enthält als Füllstoff ausschließlich Ruß in einem Anteil von 55 phr. Die Mischung M_{E1} enthält ausschließlich Ruß als Füllstoff, die Mischung M_{E2} ausschließlich Kieselsäure, die Mischungen M_{E3} und M_{E4} gewisse Anteile an Ruß und Kieselsäure, wobei der gesamte Füllstoffanteil < 40 phr bzw. < 35 phr ist. Der Anteil an Naturkautschuk in den Mischungen M_{Ref} sowie M_{E1} bis M_{E4} beträgt vorzugsweise 60 phr bis 100 phr, wobei in den Mischungen neben Naturkautschuk auch Synthesekautschuk, beispielsweise IR und/oder SBR enthalten sein kann. Der Anteil an Alterungsschutzmittel kann 0,5 phr bis 4,5 phr, der Anteil an einem oder mehreren der üblichen Beschleuniger, beispielsweise CBS und/oder TBBS und oder/DCBS, 0,7 phr bis 3,0 phr betragen. Bezüglich Ruß und Kieselsäure kommen die in Kautschukmischungen für Reifenbauteile üblichen Typen in Frage.

Squeegee-Lagen 1 in Nutzfahrzeugreifen auf der Basis von Squeegee-Mischungen mit einem Füllstoffanteil < 43 phr haben, wie entsprechende Versuche mit LKW- und Busreifen gezeigt haben, positive Auswirkungen auf den Rollwiderstand der Reifen. Der gemäß ISO 28580 ermittelte Rollwiderstand ist um etwa 1,5 % bis 2,5 % geringer als jener von Reifen mit Squeegee-Lagen, die einen Füllstoffanteil von etwa 55 phr aufweisen.

In Folge des niedrigen Füllstoffanteils in erfindungsgemäßen Squeegee-Mischungen erhöht sich das Fließ- und Kriechverhalten der Squeegee-Mischungen. Um auf jeden Fall sicherzustellen, dass durch das veränderte Fließ- bzw. Kriechverhalten der Squeegee-Mischung bzw. der Squeegee-Lage 1 die Innenschichtmischung bzw. die Innenschicht während des Reifenbaus oder der Vulkanisation oder während des Reifeneinsatzes nicht in direkten Kontakt mit den Karkasskorden in der Karkasseinlage 4 kommt oder in den Bereich zwischen den parallel verlaufenden Karkasskorden der Karkasseinlage 4 eindringt, ist es vorteilhaft, die Schichtdicke der Squeegee-Lage 1 beim Aufbau des Reifens gegenüber der Dicke bekannter Squeegee-Lagen, insbesondere in gewissen Bereichen, zu erhöhen. Überraschenderweise ist für Squeegeemischungen mit einem Füllstoffanteil < 43 phr bei einer erhöhten Schichtdicke der Squeegee-Lage 1 der erwähnte niedrigere Rollwiderstand erhalten geblieben. Nach dem allgemeinen Verständnis würde eine Erhöhung der Schichtdicke und damit des Materialvolumens der Squeegee-Lage zu einem erhöhten Rollwiderstand führen, da zu erwarten ist, dass eine zusätzliche Materialmenge zur Dissipation und damit zur Rollwiderstandserhöhung beiträgt.

Tabelle 2 gibt die Ergebnisse von Reifenversuchen wieder. Der Reifen mit der Bezeichnungen R_{Ref} ist ein Referenzreifen, in welchem die Squeegee-Lage aus der Mischung M_{Ref} hergestellt wurde. Der Reifen R_{A} sowie der Reifen R(_{ME1)} sind Versuchsreifen, welche eine Squeegee-Lage aufwiesen, die aus der Mischung M_{E1} hergestellt wurde. Beim Reifen R_{A} entsprach die Dicke des in den Rohreifen eingebrachten Squeegee-Bauteils jener gemäß dem Referenzreifen R_{Ref}. In den Reifen R(M_{E1}) wurde im Reifenaufbauprozess ein Squeegee-Bauteil eingebracht, welcher eine größere Dicke aufwies, als die in den Reifen R_{Ref} und R_{A} eingebetteten Squeegee-Bauteile. Die Reifen R_{(ME2)}, R_{(ME3)} und R_{(ME4)} wiesen Squeegee-Bauteile aus den entsprechenden Mischungen auf, ihre Dicke beim Aufbauprozess entsprach jeweils der Dicke des Squeegee-Bauteils im Reifen R_{(ME1)}. Von jedem Reifen R_{Ref}, R_{A} und R_{(ME1)}, R_{(ME2)}, R_{(ME3)} und R_{(ME4)} werden je zwei Testreifen hergestellt und der Rollwiderstand gemäß ISO 28580 gemessen. In Tabelle 2 ist die Dicke d₁ die Dicke des Squeegee-Bauteils beim Reifenaufbauprozess in Millimeter. Die Dicke d₂ ist die Dicke der Squeegee-Lage 1 im vulkanisierten Reifen, ebenfalls in Millimeter, gemessen an der dünnsten Stelle zwischen der Stelle mit der größten Querschnittsbreite des Reifens und einer Stelle, welche den seitlichen Rändern der ersten, innersten Gürtellage 3a zugeordnet ist. Eine in axialer Richtung verlaufende, gestrichelte Linie l₁ in Fig. 1 ist an der breitesten Stelle des Reifens eingezeichnet, eine gestrichelte Linie l₂, die von Randkante der radial innersten Gürtellage 3a ausgehend im rechten Winkel zu einer Tangente an die Karkasseinlage 4 verläuft, kennzeichnet die zweite erwähnte Stelle.

**Tabelle 2**

| | R_{Ref} | R_{A} | R(M_{E1}) | R(M_{E2}) | R(M_{E3}) | R(M_{E4}) |
|---|---|---|---|---|---|---|
| Dicke d₁ [mm] | 3,0 | 3,0 | 4,2 | 4,2 | 4,2 | 4,2 |
| Dicke d₂ [mm] | 1,7 | 1,6 | 2,4 | 2,4 | 2,4 | 2,4 |
| Rollwiderstand Reifen 1 | 4,99 | 4,91 | 4,91 | 4,92 | 4,90 | 4,91 |
| Rollwiderstand Reifen 2 | 4,99 | 4,90 | 4,89 | 4,89 | 4,93 | 4,89 |
| Mittelwert Rollwiderstand Reifen 1 und 2 | 4,99 | 4,905 | 4,90 | 4,91 | 4,915 | 4,90 |
| Rollwiderstand [%] | 100 | 98,3 | 98,2 | 98,4 | 98,5 | 98,2 |

Zur Optimierung der Schichtdicke der Squeegee-Lage 1, insbesondere zur Sicherstellung der Dauerhaltbarkeit und der Runderneuerungsfähigkeit der Reifen bei einem möglichst minimalen Einsatz an zusätzlichem Gummimaterial, werden besonders bevorzugte Maßnahmen getroffen. Es ist bekannt, dass Kriech- und Fließvorgänge vor allem im Bereich der Reifenschultern auftreten. Daher ist speziell in diesen Bereichen eine höhere Schichtdicke der Squeegee-Lage 1 von Vorteil. Vorzugsweise ist die Schichtdicke d₃ der Squeegee-Lage 1 im Bereich der Randkanten der breitesten Gürtellage 3a um mindestens 25 %, insbesondere um mindestens 50 %, bevorzugt um mindestens 100 % und besonders bevorzugt um mindestens 300 % höher als der arithmetische Mittelwert der Schichtdicken der Squeege-Lage 1 am Reifenzenit Z und an den Stellen mit der größten Querschnittsbreite

Die Stelle zur Ermittlung der Schichtdicke im Bereich der Randkanten der breitesten Gürtellage 3a ist in Fig. 1 durch eine gestrichelte Linie l₃ gekennzeichnet, die senkrecht zu einer Tangente an die Karkasseinlage 4 in diesem Bereich verläuft. Die Schichtdicke d₃ der Squeegee-Lage 1 an dieser Stelle kann bis zum Fünffachen des erwähnten Mittelwertes betragen. Von der Linie l₃ ausgehend kann die Dicke d₃ der Squeegee-Lage 1 über eine gewisse Erstreckung weitgehend unverändert erhalten bleiben und dann in einer oder mehreren Stufen oder kontinuierlich abnehmen, sodass die Squeegee-Lage 1 über ihre Erstreckung in den Schulterbereichen dicker ist als außerhalb der Schulterbereiche. Der dickere Bereich erstreckt sich beispielsweise über einen Abschnitt der Squeegee-Lage 1, dessen Erstreckungslänge 7,0 cm bis 14, 0 cm beträgt, je nach Reifendimension. In diesem Abschnitt beträgt die Dicke der Squeegee-Lage 1 insbesondere 2,0 mm bis 3,5 mm. Anschließend verringert sich die Dicke der Squeegee-Lage 1 im Wesentlichen bzw. weitgehend kontinuierlich in Richtung zum bzw. bis zum Reifenzenit Z und/oder in Richtung zur bzw. bis zu den Stellen des Reifens mit der größten Querschnittsbreite, verglichen mit dem arithmetischen Mittelwert der Schichtdicken der Squeegee-Lage 1 am Reifenzenit Z und an den Stellen mit der größten Querschnittsbreite.

### Bezugszeichenliste

- 1: Squeegee-Lage
- 2: Laufstreifen
- 3: Gürtelverband
- 3a: Gürtellage
- 4: Karkasseinlage
- 5: Seitenwand
- 6: Wulstbereich
- 7: Wulstkern
- 8: Innenschicht
- 9: Hornprofil
- d₁, d₂, d₃: Dicke
- l₁, l₂, l₃: Linie
- Z: Reifenzenit

## Patentansprüche

1. Nutzfahrzeugreifen in radialer Bauart mit einem Laufstreifen (2), einem mehrere Gürtellagen (3a) aufweisenden Gürtelverband (3), einer der Reifeninnenseite zugewandten, luftdichten Innenschicht (8), einer Karkasseinlage (4) mit in radialer Richtung oder im Wesentlichen in radialer Richtung verlaufenden Karkasskorden und einer zwischen der Karkasseinlage (4) und der Innenschicht (8) befindlichen Squeegee-Lage (1), welche auf einer Kautschukmischung basiert, die als Füllstoff Ruß und/oder Kieselsäure enthält,
**dadurch gekennzeichnet,**
**dass** die Squeegee-Lage (1) auf einer Kautschukmischung basiert, deren Füllstoffanteil an Ruß und/oder Kieselsäure 20 phr bis kleiner 35 phr beträgt.

2. Nutzfahrzeugreifen nach Anspruch 1, **dadurch gekennzeichnet, dass** die Squeegee-Lage (1) in ihrem Verlauf über die Reifenschulterbereiche dicker ist als in ihrem Verlauf außerhalb der Reifenschulterbereiche.

3. Nutzfahrzeugreifen nach Anspruch 1 oder 2, **dadurch gekennzeichnet, dass** die Squeegee-Lage (1) im Bereich der Randkanten der breitesten Gürtellage (3a) eine Schichtdicke (d₃) aufweist, welche um mindestens 25 %, insbesondere um mindestens 50 %, bevorzugt um mindestens 100 % und besonders bevorzugt um mindestens 300 %, größer ist als der arithmetische Mittelwert der Schichtdicken am Reifenzenit (Z) und an den Stellen des Reifens mit der größten Querschnittsbreite.

4. Nutzfahrzeugreifen nach einem der Ansprüche 1 bis 3, **dadurch gekennzeichnet, dass** die Squeegee-Lage (1) im Bereich der Randkanten der breitesten Gürtellage (3a) eine Schichtdicke (d₃) von 1,0 mm bis 3,5 mm, insbesondere von mindestens 2,0 mm, aufweist.

5. Nutzfahrzeugreifen nach einem der Ansprüche 1 bis 4, **dadurch gekennzeichnet, dass** die Schichtdicke (d₃) der Squeegee-Lage (1) im Bereich der Randkanten der breitesten Gürtellage (3a) höchstens dem 5-Fachen des arithmetischen Mittelwertes der Schichtdicken am Reifenzenit (Z) und an jenen Stellen, wo der Reifen seine größte Querschnittsbreite aufweist, beträgt.

6. Nutzfahrzeugreifen nach einem der Ansprüche 1 bis 5, **dadurch gekennzeichnet, dass** sich die Dicke der Squeegee-Lage (1) außerhalb der Reifenschulterbereiche in Richtung zum Reifenzenit (Z) und/oder in Richtung zu den Stellen des Reifens mit der größten Querschnittsbreite, insbesondere kontinuierlich, verringert.

## Claims

1. Commercial vehicle tyre of a radial type of construction with a tread (2), a breaker belt assembly (3), having a number of belt plies (3a), an airtight inner layer (8), facing the inner side of the tyre, a carcass insert (4), with carcass cords running in the radial direction or substantially in the radial direction, and a squeegee ply (1), which is located between the carcass insert (4) and the inner layer (8) and is based on a rubber compound which contains carbon black and/or silica as a filler,
**characterized**
**in that** the squeegee ply (1) is based on a rubber compound in which the filler component of carbon black and/or silica is 20 phr to less than 35 phr.

2. Commercial vehicle tyre according to Claim 1, **characterized in that** the squeegee ply (1) is thicker where it runs over the tyre shoulder regions than where it runs outside the tyre shoulder regions.

3. Commercial vehicle tyre according to Claim 1 or 2, **characterized in that** the squeegee ply (1) has in the region of the peripheral edges of the widest belt ply (3a) a layer thickness (d₃) which is greater by at least 25%, in particular by at least 50%, preferably by at least 100% and particularly preferably by at least 300%, than the arithmetic mean value of the layer thicknesses at the tyre zenith (Z) and at the locations of the tyre with the greatest cross-sectional width.

4. Commercial vehicle tyre according to one of Claims 1 to 3, **characterized in that** the squeegee ply (1) has in the region of the peripheral edges of the widest belt ply (3a) a layer thickness (d₃) of 1.0 mm to 3.5 mm, in particular of at least 2.0 mm.

5. Commercial vehicle tyre according to one of Claims 1 to 4, **characterized in that** the layer thickness (d₃) of the squeegee ply (1) in the region of the peripheral edges of the widest belt ply (3a) is at most 5 times the arithmetic mean value of the layer thicknesses at the tyre zenith (Z) and at those locations where the tyre has its greatest cross-sectional width.

6. Commercial vehicle tyre according to one of Claims 1 to 5, **characterized in that** the thickness of the squeegee ply (1) outside the tyre shoulder regions decreases, in particular continuously, in the direction of the tyre zenith (Z) and/or in the direction of the locations of the tyre with the greatest cross-sectional width.

## Revendications

1. Pneu de véhicule utilitaire de construction radiale, comprenant une bande de roulement (2), un assemblage de ceinture (3) présentant plusieurs nappes de ceinture (3a), une couche intérieure (8) étanche à l'air et tournée vers le côté intérieur du pneu, un insert de carcasse (4) doté de cordes de carcasse s'étendant dans la direction radiale ou substantiellement dans la direction radiale, et une couche intermédiaire (« squeegee ») (1) située entre l'insert de carcasse (4) et la couche intérieure (8), basée sur un mélange de caoutchouc contenant du noir de carbone et/ou de la silice comme matière de charge,
**caractérisé en ce que** la couche intermédiaire (1) est basée sur un mélange de caoutchouc dont le pourcentage de matière de charge en noir de carbone et/ou en silice est compris entre 20 phr et moins de 35 phr.

2. Pneu de véhicule utilitaire selon la revendication 1, **caractérisé en ce que** la couche intermédiaire (1) est plus épaisse dans son tracé sur les zones d'épaule de pneu que sur son tracé à l'extérieur des zones d'épaule de pneu.

3. Pneu de véhicule utilitaire selon la revendication 1 ou 2, **caractérisé en ce que** la couche intermédiaire (1) présente au niveau des arêtes de bord de la nappe de ceinture (3a) la plus large une épaisseur de couche (d₃) qui est supérieure d'au moins 25 %, en particulier d'au moins 50 %, de préférence d'au moins 100 % et de manière particulièrement préférée d'au moins 300 % à la moyenne arithmétique des épaisseurs de couche au zénith du pneu (Z) et aux endroits du pneu ayant la plus grande largeur de section transversale.

4. Pneu de véhicule utilitaire selon l'une quelconque des revendications 1 à 3, **caractérisé en ce que** la couche intermédiaire (1) présente au niveau des arêtes de bord de la nappe de ceinture (3a) la plus large une épaisseur de couche (d₃) comprise entre 1,0 mm et 3,5 mm, en particulier égale à au moins 2,0 mm.

5. Pneu de véhicule utilitaire selon l'une quelconque des revendications 1 à 4, **caractérisé en ce que** l'épaisseur de couche (d₃) de la couche intermédiaire (1) au niveau des arêtes de bord de la nappe de ceinture (3a) la plus large est au plus égale à 5 fois la moyenne arithmétique des épaisseurs de couche au zénith du pneu (Z) et aux endroits où le pneu présente sa plus grande largeur de section transversale.

6. Pneu de véhicule utilitaire selon l'une quelconque des revendications 1 à 5, **caractérisé en ce que** l'épaisseur de la couche intermédiaire (1) diminue, en particulier en continu, à l'extérieur des zones d'épaule de pneu en direction du zénith du pneu (Z) et/ou en direction des endroits du pneu ayant la plus grande largeur de section transversale.
